# EUROPEAN PATENT APPLICATION

(11) **EP 4 718 699 A1**
(43) Date of publication of application: **01.04.2026**
(21) Application number: 25205691.6
(22) Date of filing: 30.09.2025
(51) Int. Cl.: H02M 1/32, H02M 1/36, H02M 7/487, H02H 11/00, H02M 7/483

(54) **POWER CONVERTER**

(30) Priority: 30.09.2024 CN 202411381797
(71) Applicant: Huawei Digital Power Technologies Co., Ltd., Shenzhen, Guangdong 518043 (CN)
(72) Inventor: QIAN, Bin, Shenzhen 518043 (CN); ZHONG, Qinglong, Shenzhen 518043 (CN); WANG, Chen, Shenzhen 518043 (CN); TANG, Junsong, Shenzhen 518043 (CN)
(74) Representative: Isarpatent

(57) **Abstract**

Embodiments of this application provide a power converter. The power converter includes a controller, at least one bridge arm, and a first capacitor and a second capacitor that are connected in series. Each bridge arm includes a first switching transistor, a second switching transistor, a third switching transistor, and a fourth switching transistor. The first switching transistor and the fourth switching transistor are connected in series and then connected in parallel to two ends of the first capacitor and the second capacitor that are connected in series, and a connection end of the first switching transistor and the fourth switching transistor is connected to a connection end of the first capacitor and the second capacitor through the second switching transistor and the third switching transistor that are connected in reverse series. After the power converter is started, the controller controls a target switching transistor in each bridge arm to remain on. A target capacitor starts to be charged after the target switching transistor in each bridge arm is turned on. The target capacitor is at least one of the first capacitor and the second capacitor, and the target switching transistor is at least one of the switching transistors in each bridge arm. After the target capacitor is charged, and when a voltage across two ends of the target capacitor does not reach a voltage threshold, the controller outputs information indicating that a switching transistor short-circuit fault exists in each bridge arm.

## Description

### TECHNICAL FIELD

This application relates to the field of power electronics, and in particular, to a power converter.

### BACKGROUND

As a penetration rate of distributed energy such as photovoltaics, wind power, and an energy storage apparatus gradually increases, a power converter or converter, as an important component unit of energy exchange, is increasingly widely used in a power supply system. In a working process of the power converter or converter, a switching transistor may fail. For example, a short-circuit of the switching transistor leads to a cross-conduction fault in a topology, a short-circuit of a busbar, and an overcurrent-caused damage to the switching transistor. To start the power converter or converter without causing further damage when the power converter or converter is abnormal, it is necessary to perform some startup self-tests before the power converter or converter is started, to ensure that the device works safely.

### SUMMARY

Embodiments of this application provide a power converter, so that short-circuit fault detection can be performed on a switching transistor before the power converter works. This prevents an abnormal working condition such as a busbar short-circuit or short-circuit fault spreading from occurring in a working process of the power converter, and improves working reliability of the power converter.

According to a first aspect, this application provides a power converter. The power converter includes a controller, at least one bridge arm, and a first capacitor and a second capacitor that are connected in series. The first capacitor is connected to a positive direct current busbar, and the second capacitor is connected to a negative direct current busbar. Each of the at least one bridge arm includes a first switching transistor, a second switching transistor, a third switching transistor, and a fourth switching transistor. The first switching transistor and the fourth switching transistor are connected in series and then connected in parallel to two ends of the first capacitor and the second capacitor that are connected in series. In addition, a connection end of the first switching transistor and the fourth switching transistor is connected to a connection end of the first capacitor and the second capacitor through the second switching transistor and the third switching transistor that are connected in reverse series. The controller is configured to: after the power converter is started, control a target switching transistor in each bridge arm to remain on. The other switching transistors other than the target switching transistor in each bridge arm remain off. A target capacitor starts to be charged after the target switching transistor in each bridge arm is turned on. The target capacitor is at least one of the first capacitor and the second capacitor, and the target switching transistor is at least one of the first switching transistor, the second switching transistor, the third switching transistor, and the fourth switching transistor in each bridge arm. The controller is further configured to: after the target capacitor is charged, and when a voltage across two ends of the target capacitor does not reach a voltage threshold, output information indicating that a switching transistor short-circuit fault exists in each bridge arm.

In this application, after the power converter is started and before the power converter formally works, the controller in the power converter controls the target switching transistor in each bridge arm to remain on. The target capacitor starts to be charged after the target switching transistor in each bridge arm is turned on. That the voltage across the two ends of the target capacitor is zero may be that before the power converter is connected to a direct current power supply, the target capacitor is not charged and the voltage across the two ends of the target capacitor is zero, or may be that the target capacitor is discharged until the voltage across the two ends of the target capacitor is zero. Then, after the target capacitor is charged, and when the voltage across the two ends of the target capacitor does not reach the voltage threshold, the controller determines that a switching transistor in the current power converter is short-circuited, and outputs information indicating that a switching transistor short-circuit fault exists in each bridge arm. The faulty switching transistor is detected before the power converter works. This prevents an abnormal working condition such as a busbar short-circuit or short-circuit fault spreading from occurring in a working process of the power converter, and improves working reliability of the power converter.

In a possible implementation, the power converter includes a soft-start switch and a resistor that are connected in series to the positive direct current busbar or the negative direct current busbar, the target capacitor is the first capacitor and the second capacitor, and the target switching transistor is the first switching transistor in each bridge arm. That the target capacitor starts to be charged after the target switching transistor in each bridge arm is turned on is specifically as follows: After the first switching transistor in each bridge arm remains on, the controller controls the soft-start switch to be turned on, to connect the first capacitor and the second capacitor to a direct current power supply to start to charge the first capacitor and the second capacitor by using the direct current power supply. The controller is further configured to: after the direct current power supply charges the first capacitor and the second capacitor, and when a voltage across two ends of the first capacitor does not reach the voltage threshold, output information indicating that the third switching transistor is short-circuited, or after the direct current power supply charges the first capacitor and the second capacitor, and when a voltage across two ends of the first capacitor and a voltage across two ends of the second capacitor both do not reach the voltage threshold, output information indicating that the fourth switching transistor is short-circuited. Herein, if the third switching transistor is short-circuited, and the second switching transistor is turned off, a diode connected in parallel to the second switching transistor may conduct a current flowing from the connection end of the first switching transistor and the fourth switching transistor to the connection end of the first capacitor and the second capacitor. Therefore, the third switching transistor and the second switching transistor both cannot cut off the current flowing from the connection end of the first switching transistor and the fourth switching transistor to the connection end of the first capacitor and the second capacitor, and the voltage across the first capacitor cannot be normally boosted because the first capacitor is short-circuited. If the fourth switching transistor is short-circuited, the fourth switching transistor cannot cut off a current flowing from the positive direct current busbar to the negative direct current busbar, and the voltage across the first capacitor and the voltage across the second capacitor cannot be normally boosted because the first capacitor and the second capacitor are short-circuited. Therefore, short-circuit fault detection can be accurately performed on the switching transistor based on a voltage change across the two ends of the first capacitor and a voltage change across the two ends of the second capacitor after the first capacitor and the second capacitor are charged.

In a possible implementation, the power converter includes a soft-start switch and a resistor that are connected in series to the positive direct current busbar or the negative direct current busbar, the target capacitor is the first capacitor and the second capacitor, and the target switching transistor is the fourth switching transistor in each bridge arm. That the target capacitor starts to be charged after the target switching transistor in each bridge arm is turned on is specifically as follows: After the fourth switching transistor in each bridge arm remains on, the controller controls the soft-start switch to be turned on, to connect the first capacitor and the second capacitor to a direct current power supply to start to charge the first capacitor and the second capacitor by using the direct current power supply. The controller is further configured to: after controlling the fourth switching transistor in each bridge arm to remain on, control the soft-start switch to be turned on, to connect the first capacitor and the second capacitor to the direct current power supply to charge the first capacitor and the second capacitor by using the direct current power supply. The controller is further configured to: after the direct current power supply charges the first capacitor and the second capacitor, and when a voltage across two ends of the second capacitor does not reach the voltage threshold, output information indicating that the second switching transistor is short-circuited, or after the direct current power supply charges the first capacitor and the second capacitor, and when a voltage across two ends of the first capacitor and a voltage across two ends of the second capacitor both do not reach the voltage threshold, output information indicating that the first switching transistor is short-circuited. Herein, if the second switching transistor is short-circuited, and the third switching transistor is turned off, a diode connected in parallel to the third switching transistor may conduct a current flowing from the connection end of the first capacitor and the second capacitor to the connection end of the first switching transistor and the fourth switching transistor. Therefore, the second switching transistor and the third switching transistor both cannot cut off the current flowing from the connection end of the first capacitor and the second capacitor to the connection end of the first switching transistor and the fourth switching transistor, and the voltage across the second capacitor cannot be normally boosted because the second capacitor is short-circuited. If the first switching transistor is short-circuited, the first switching transistor cannot cut off a current flowing from the positive direct current busbar to the negative direct current busbar, and the voltage across the first capacitor and the voltage across the second capacitor cannot be normally boosted because the first capacitor and the second capacitor are short-circuited. Therefore, short-circuit fault detection can be accurately performed on the switching transistor based on a voltage change across the two ends of the first capacitor and a voltage change across the two ends of the second capacitor after the first capacitor and the second capacitor are charged.

In a possible implementation, a discharge circuit is connected in parallel to the two ends of the first capacitor and the second capacitor, and the controller is configured to: after controlling the soft-start switch to be turned on, to connect the first capacitor and the second capacitor to the direct current power supply to charge the first capacitor and the second capacitor by using the direct current power supply, if the voltage across the two ends of the first capacitor and the voltage across the two ends of the second capacitor are both greater than or equal to the voltage threshold, control the first switching transistor to be turned off, and control the soft-start switch to be turned off, to disconnect the first capacitor and the second capacitor from the direct current power supply to enable the discharge circuit to discharge the first capacitor and the second capacitor, when the first capacitor and the second capacitor are discharged until the voltage across the two ends of the first capacitor and the voltage across the two ends of the second capacitor are zero, control the second switching transistor in each bridge arm to remain on, and control the soft-start switch to be turned on, to connect the first capacitor and the second capacitor to the direct current power supply to charge the first capacitor and the second capacitor by using the direct current power supply, and after the second capacitor is charged, and when the voltage across the two ends of the second capacitor does not reach the voltage threshold, output the information indicating that the fourth switching transistor is short-circuited. Herein, after the first capacitor and the second capacitor are charged, and when the voltage across the two ends of the first capacitor and the voltage across the two ends of the second capacitor are both greater than or equal to the voltage threshold, short-circuit fault detection is performed on the fourth switching transistor for a second time. This can avoid a case in which whether the fourth switching transistor is short-circuited cannot be normally detected when the first switching transistor is open-circuited, thereby improving accuracy of short-circuit fault detection of the switching transistor.

In a possible implementation, a discharge circuit is connected in parallel to the two ends of the first capacitor and the second capacitor, and the controller is configured to: after controlling the soft-start switch to be turned on, to connect the first capacitor and the second capacitor to the direct current power supply to charge the first capacitor and the second capacitor by using the direct current power supply, if the voltage across the two ends of the first capacitor and the voltage across the two ends of the second capacitor are both greater than or equal to the voltage threshold, control the fourth switching transistor to be turned off, and control the soft-start switch to be turned off, to disconnect the first capacitor and the second capacitor from the direct current power supply to enable the discharge circuit to discharge the first capacitor and the second capacitor, when the first capacitor and the second capacitor are discharged until the voltage across the two ends of the first capacitor and the voltage across the two ends of the second capacitor are zero, control the third switching transistor in each bridge arm to remain on, and control the soft-start switch to be turned on, to connect the first capacitor and the second capacitor to the direct current power supply to charge the first capacitor and the second capacitor by using the direct current power supply, and after the first capacitor is charged, and when the voltage across the two ends of the first capacitor does not reach the voltage threshold, output the information indicating that the first switching transistor is short-circuited. Herein, after the first capacitor and the second capacitor are charged, and when the voltage across the two ends of the first capacitor and the voltage across the two ends of the second capacitor are both greater than or equal to the voltage threshold, short-circuit fault detection is performed on the first switching transistor for a second time. This can avoid a case in which whether the first switching transistor is short-circuited cannot be normally detected when the fourth switching transistor is open-circuited, thereby improving accuracy of short-circuit fault detection of the switching transistor.

In a possible implementation, a discharge circuit is connected in parallel to the two ends of the first capacitor and the second capacitor, in each bridge arm, the connection end of the first switching transistor and the fourth switching transistor is also connected to the connection end of the first capacitor and the second capacitor through a filter capacitor, and after controlling the soft-start switch to be turned on, to connect the first capacitor and the second capacitor to the direct current power supply to charge the first capacitor and the second capacitor by using the direct current power supply, the controller is further configured to: if the voltage across the two ends of the first capacitor and the voltage across the two ends of the second capacitor are both greater than or equal to the voltage threshold, control the target switching transistor to be turned off, and control the soft-start switch to be turned off, to disconnect the first capacitor and the second capacitor from the direct current power supply to enable the discharge circuit to discharge the first capacitor and the second capacitor, when the first capacitor and the second capacitor are discharged until the voltage across the two ends of the first capacitor and the voltage across the two ends of the second capacitor are zero, control the soft-start switch to be turned on, to connect the first capacitor and the second capacitor to the direct current power supply to charge the first capacitor and the second capacitor by using the direct current power supply, and after the first capacitor and the second capacitor are charged, if the voltage across the two ends of the first capacitor and the voltage across the two ends of the second capacitor both do not reach the voltage threshold, output information indicating that the first switching transistor and the fourth switching transistor are short-circuited. Alternatively, the controller is further configured to: if the voltage across the two ends of the first capacitor and the voltage across the two ends of the second capacitor are both greater than or equal to the voltage threshold, control the target switching transistor to be turned off, and control the soft-start switch to be turned off, to disconnect the first capacitor and the second capacitor from the direct current power supply to enable the discharge circuit to discharge the first capacitor and the second capacitor, when the first capacitor and the second capacitor are discharged until the voltage across the two ends of the first capacitor and the voltage across the two ends of the second capacitor are zero, control the soft-start switch to be turned on, to connect the first capacitor and the second capacitor to the direct current power supply to charge the first capacitor and the second capacitor by using the direct current power supply, and after the first capacitor and the second capacitor are charged, if a voltage across two ends of the filter capacitor is equal to the voltage across the two ends of the first capacitor or the voltage across the two ends of the second capacitor, output the information indicating that the first switching transistor or the fourth switching transistor is short-circuited. Herein, after the first capacitor and the second capacitor are charged, and when the voltage across the two ends of the first capacitor and the voltage across the two ends of the second capacitor are both greater than or equal to the voltage threshold, short-circuit fault detection is performed on the first switching transistor or the fourth switching transistor for a second time. This can avoid a case in which whether the first switching transistor is short-circuited cannot be normally detected when the fourth switching transistor is open-circuited and a case in which whether the fourth switching transistor is short-circuited cannot be normally detected when the first switching transistor is open-circuited, thereby improving accuracy of short-circuit fault detection of the switching transistor.

In a possible implementation, the power converter further includes an electric energy transfer unit, and the controller is configured to: after controlling the soft-start switch to be turned on, to connect the first capacitor and the second capacitor to the direct current power supply to charge the first capacitor and the second capacitor by using the direct current power supply, if the voltage across the two ends of the first capacitor and the voltage across the two ends of the second capacitor are both greater than or equal to the voltage threshold, control the target switching transistor to be turned off, and control the electric energy transfer unit and discharge the first capacitor by using the electric energy transfer unit. The controller is further configured to: when the first capacitor is discharged by using the electric energy transfer unit until the voltage across the two ends of the first capacitor is zero, control the third switching transistor in each bridge arm to remain on, and control the electric energy transfer unit and charge the first capacitor by using the electric energy transfer unit. The controller is further configured to: after the first capacitor is charged by using the electric energy transfer unit, if the voltage across the two ends of the first capacitor does not reach the voltage threshold, output the information indicating that the first switching transistor is short-circuited. Herein, if the first switching transistor is short-circuited, the first switching transistor cannot cut off the current flowing from the positive direct current busbar to the negative direct current busbar, and the voltage across the first capacitor cannot be normally boosted because the first capacitor is short-circuited. Therefore, short-circuit fault detection can be accurately performed on the switching transistor based on the voltage change across the two ends of the first capacitor after the first capacitor is charged.

In a possible implementation, the power converter further includes an electric energy transfer unit, and the controller is configured to: after controlling the soft-start switch to be turned on, to connect the first capacitor and the second capacitor to the direct current power supply to charge the first capacitor and the second capacitor by using the direct current power supply, if the voltage across the two ends of the first capacitor and the voltage across the two ends of the second capacitor are both greater than or equal to the voltage threshold, control the first switching transistor to be turned off, and control the electric energy transfer unit and discharge the second capacitor by using the electric energy transfer unit. The controller is further configured to: when the second capacitor is discharged by using the electric energy transfer unit until the voltage across the two ends of the second capacitor is zero, control the fourth switching transistor in each bridge arm to remain on, and control the electric energy transfer unit and charge the second capacitor by using the electric energy transfer unit. The controller is further configured to: after the second capacitor is charged by using the electric energy transfer unit, if the voltage across the two ends of the second capacitor does not reach the voltage threshold, output information indicating that the second switching transistor is short-circuited. Herein, if the second switching transistor is short-circuited, and the third switching transistor is turned off, a diode connected in parallel to the third switching transistor may conduct a current flowing from the connection end of the first capacitor and the second capacitor to the connection end of the first switching transistor and the fourth switching transistor. Therefore, the second switching transistor and the third switching transistor both cannot cut off the current flowing from the connection end of the first capacitor and the second capacitor to the connection end of the first switching transistor and the fourth switching transistor, and the voltage across the second capacitor cannot be normally boosted because the second capacitor is short-circuited. Short-circuit fault detection can be accurately performed on the switching transistor based on the voltage change across the two ends of the second capacitor after the second capacitor is charged.

In a possible implementation, the power converter further includes an electric energy transfer unit, and the controller is configured to: after controlling the soft-start switch to be turned on, to connect the first capacitor and the second capacitor to the direct current power supply to charge the first capacitor and the second capacitor by using the direct current power supply, if the voltage across the two ends of the first capacitor and the voltage across the two ends of the second capacitor are both greater than or equal to the voltage threshold, control the fourth switching transistor to be turned off, and control the electric energy transfer unit and discharge the first capacitor by using the electric energy transfer unit. The controller is further configured to: when the first capacitor is discharged by using the electric energy transfer unit until the voltage across the two ends of the first capacitor is zero, control the first switching transistor in each bridge arm to remain on, and control the electric energy transfer unit and charge the first capacitor by using the electric energy transfer unit. The controller is further configured to: after the first capacitor is charged by using the electric energy transfer unit, if the voltage across the two ends of the first capacitor does not reach the voltage threshold, output information indicating that the third switching transistor is short-circuited. Herein, if the third switching transistor is short-circuited, and the second switching transistor is turned off, a diode connected in parallel to the second switching transistor may conduct a current flowing from the connection end of the first switching transistor and the fourth switching transistor to the connection end of the first capacitor and the second capacitor. Therefore, the third switching transistor and the second switching transistor both cannot cut off the current flowing from the connection end of the first switching transistor and the fourth switching transistor to the connection end of the first capacitor and the second capacitor, and the voltage across the first capacitor cannot be normally boosted because the first capacitor is short-circuited. Short-circuit fault detection can be accurately performed on the switching transistor based on the voltage change across the two ends of the first capacitor after the first capacitor is charged.

In a possible implementation, the power converter further includes an electric energy transfer unit, and the controller is configured to: after controlling the soft-start switch to be turned on, to connect the first capacitor and the second capacitor to the direct current power supply to charge the first capacitor and the second capacitor by using the direct current power supply, if the voltage across the two ends of the first capacitor and the voltage across the two ends of the second capacitor are both greater than or equal to the voltage threshold, control the target switching transistor to be turned off, and control the electric energy transfer unit and discharge the second capacitor by using the electric energy transfer unit. The controller is further configured to: when the second capacitor is discharged by using the electric energy transfer unit until the voltage across the two ends of the second capacitor is zero, control the second switching transistor in each bridge arm to remain on, and control the electric energy transfer unit and charge the second capacitor by using the electric energy transfer unit. The controller is further configured to: after the second capacitor is charged by using the electric energy transfer unit, after the second capacitor is charged, and if the voltage across the two ends of the second capacitor does not reach the voltage threshold, output the information indicating that the fourth switching transistor is short-circuited. If the fourth switching transistor is short-circuited, the fourth switching transistor cannot cut off the current flowing from the positive direct current busbar to the negative direct current busbar, and the voltage across the second capacitor cannot be normally boosted because the second capacitor is short-circuited. Short-circuit fault detection can be accurately performed on the switching transistor based on the voltage change across the two ends of the second capacitor after the second capacitor is charged.

In a possible implementation, the electric energy transfer unit includes an inductor, a fifth switching transistor and a sixth switching transistor that are connected in series. The fifth switching transistor is connected to the positive direct current busbar, the sixth switching transistor is connected to the negative direct current busbar, and a connection end of the fifth switching transistor and the sixth switching transistor is connected to the connection end of the first capacitor and the second capacitor through the inductor. Controlling the electric energy transfer unit and discharging the first capacitor or the second capacitor by using the electric energy transfer unit are specifically as follows: controlling the fifth switching transistor and the sixth switching transistor to act, to transfer, through the inductor, electric energy of the first capacitor to the second capacitor to discharge the first capacitor, or transfer, through the inductor, electric energy of the second capacitor to the first capacitor to discharge the second capacitor. Controlling the electric energy transfer unit and charging the first capacitor or the second capacitor by using the electric energy transfer unit are specifically as follows: controlling the fifth switching transistor and the sixth switching transistor to act, to transfer, through the inductor, the electric energy of the second capacitor to the first capacitor to charge the first capacitor, or transfer, through the inductor, the electric energy of the first capacitor to the second capacitor to charge the second capacitor.

In a possible implementation, in a process of charging the target capacitor, a voltage change rate across the two ends of the target capacitor is less than a specified threshold. Herein, because the soft-start circuit includes the resistor, the resistor may limit an impulse current when the power converter is powered on, so that in a charging process of the first capacitor and the second capacitor, a voltage change rate across the two ends of the first capacitor and a voltage change rate across the two ends of the second capacitor are less than the specified threshold. This avoids a transient voltage jump across the two ends of the first capacitor and a transient voltage jump across the two ends of the second capacitor. In addition, when a short-circuited switching transistor exists in the bridge arm, this prevents a large current from being connected, which causes overcurrent damage to some switching transistors.

### BRIEF DESCRIPTION OF DRAWINGS

FIG. 1 is a diagram of an application scenario of a power supply system according to this application;
FIG. 2 is a diagram of another application scenario of a power supply system according to this application;
FIG. 3 is a diagram of a structure of a power converter according to this application;
FIG. 4 is a diagram of another structure of a power converter according to this application;
FIG. 5 is a diagram of another structure of a power converter according to this application;
FIG. 6 is a diagram of another structure of a power converter according to this application;
FIG. 7 is a diagram of another structure of a power converter according to this application;
FIG. 8 is a diagram of a short-circuited switching transistor in a power converter according to this application;
FIG. 9 is a diagram of another short-circuited switching transistor in a power converter according to this application;
FIG. 10 is a diagram of another short-circuited switching transistor in a power converter according to this application; and
FIG. 11 is a diagram of another structure of a power converter according to this application.

### DESCRIPTION OF EMBODIMENTS

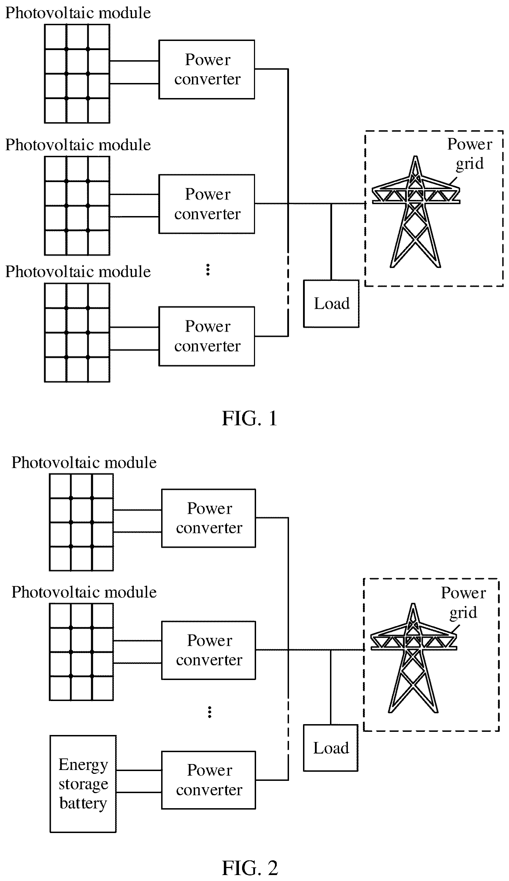

FIG. 1 is a diagram of an application scenario of a power supply system according to this application. The power supply system provided in this application may include a direct current power supply and at least one power converter. The direct current power supply is a photovoltaic module. An example in which the power supply system includes a plurality of power converters is used. A direct current end of the power converter is configured to connect to the photovoltaic module. Alternating current ends of the power converters are connected in parallel, and then are connected to a power grid or a load. The power converter may perform inversion conversion on a direct current provided by an energy storage battery, and output an alternating current obtained through inversion conversion to the power grid or load for power supply.

In some feasible implementations, the direct current power supply is the energy storage battery, the direct current end of each power converter may be configured to connect to the energy storage battery. FIG. 2 is a diagram of another application scenario of the power supply system according to this application. In the plurality of power converters in the power supply system, direct current ends of some power converters are configured to connect to the energy storage battery. The alternating current ends of the plurality of power converters are connected in parallel, and then are configured to connect to the power grid or load. Each power converter may perform inversion conversion on a direct current provided by the photovoltaic module or the energy storage battery, and output an alternating current obtained through inversion conversion to the power grid or load for power supply. Herein, the power converter connected to the photovoltaic module in the power supply system may be an inverter, and the power converter connected to the energy storage battery in the power supply system may be a converter.

In the application scenario of the power supply system shown in FIG. 1 or FIG. 2, in a working process of the power converter or converter, a switching transistor may fail. For example, a short-circuit of the switching transistor leads to a cross-conduction fault in a topology, a short-circuit of a busbar, and an overcurrent-caused damage to the switching transistor. To start the power converter or converter without causing further damage when the power converter or converter is abnormal, it is necessary to set a startup self-test before the power converter starts to work, that is, before the power converter is connected to the load or power grid and performs inversion conversion, to ensure that the device works safely.

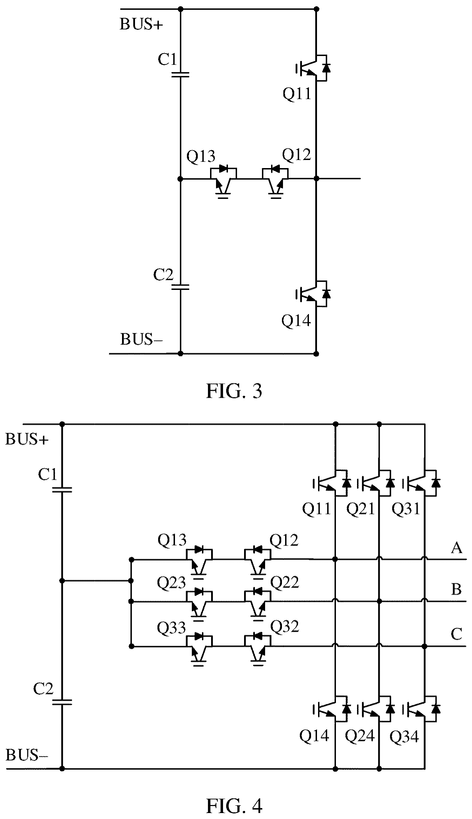

FIG. 3 is a diagram of a structure of the power converter according to this application. As shown in FIG. 3, the power converter in FIG. 3 may include a first capacitor C1 and a second capacitor C2 that are connected in series, and include a bridge arm. The bridge arm may include a first switching transistor Q11 and a fourth switching transistor Q14 that are connected in series. The first switching transistor Q11 and the fourth switching transistor Q14 that are connected in series are connected in parallel to two ends of the first capacitor C1 and the second capacitor C2 that are connected in series . In addition, a connection end of the first switching transistor Q11 and the fourth switching transistor Q14 is connected to a connection end of the first capacitor C1 and the second capacitor C2 through a second switching transistor Q12 and a third switching transistor Q13 that are connected in reverse series. In addition, the connection end of the first switching transistor Q11 and the fourth switching transistor Q14 may lead out an output port. Herein, that the second switching transistor Q12 and the third switching transistor Q13 are connected in reverse series may be that directions of diodes connected in parallel to the second switching transistor Q12 and the third switching transistor Q13 are opposite. In other words, current conduction directions of the diodes connected in parallel to the second switching transistor Q12 and the third switching transistor Q13 are opposite, and the diodes connected in parallel to the second switching transistor Q12 and the third switching transistor Q13 may be body diodes included in the second switching transistor Q12 and the third switching transistor Q13. For example, the diode connected in parallel to the second switching transistor Q12 may conduct a current flowing from the connection end of the first switching transistor Q11 and the fourth switching transistor Q14 to the connection end of the first capacitor C1 and the second capacitor C2, and the diode connected in parallel to the third switching transistor Q13 may conduct a current flowing from the connection end of the first capacitor C1 and the second capacitor C2 to the connection end of the first switching transistor Q11 and the fourth switching transistor Q14. Herein, in the second switching transistor Q12 and the third switching transistor Q13 that are connected in reverse series, the third switching transistor Q13 may be connected to the connection end of the first capacitor C1 and the second capacitor C2, or the second switching transistor Q12 may be connected to the connection end of the first capacitor C1 and the second capacitor C2. In this embodiment of this application, an example in which the third switching transistor Q13 is connected to the connection end of the first capacitor C1 and the second capacitor C2 is used. Details are not described below.

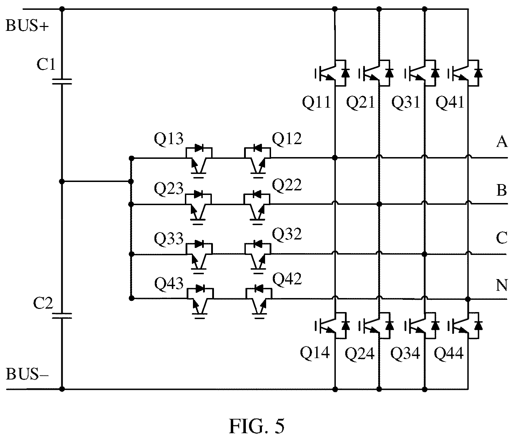

It may be understood that the power converter shown in FIG. 3 includes a single-bridge arm, and the power converter provided in this application may alternatively include a multi-bridge arm. Specifically, refer to FIG. 4. FIG. 4 is a diagram of another structure of the power converter according to this application. As shown in FIG. 4, the power converter in FIG. 4 may include the first capacitor C1 and the second capacitor C2 that are connected in series, and a phase-A bridge arm, a phase-B bridge arm, and a phase-C bridge arm. The phase-A bridge arm, the phase-B bridge arm, and the phase-C bridge arm respectively correspond to a phase-A output, a phase-B output, and a phase-C output of the power converter. The first capacitor C1 is connected to a positive direct current busbar BUS+, and the second capacitor C2 is connected to a negative direct current busbar BUS-. The phase-A bridge arm may include the first switching transistor Q11, the second switching transistor Q12, the third switching transistor Q13, and the fourth switching transistor Q14. The phase-B bridge arm may include a first switching transistor Q21, a second switching transistor Q22, a third switching transistor Q23, and a fourth switching transistor Q24. The phase-C bridge arm may include a first switching transistor Q31, a second switching transistor Q32, a third switching transistor Q33, and a fourth switching transistor Q34. It may be understood that in the power converter shown in FIG. 4, circuit structures of the phase-A bridge arm, the phase-B bridge arm, and the phase-C bridge arm are the same as a circuit structure of the bridge arm in the power converter shown in FIG. 3. Details are not described herein again. Optionally, the power converter may further include a phase-N bridge arm. FIG. 5 is a diagram of another structure of the power converter according to this application. As shown in FIG. 5, the power converter in FIG. 5 may include the first capacitor C1 and the second capacitor C2 that are connected in series, and the phase-A bridge arm, the phase-B bridge arm, the phase-C bridge arm, and the phase-N bridge arm. For the structures of the phase-A bridge arm, the phase-B bridge arm, and the phase-C bridge arm, refer to the power converter shown in FIG. 4. The phase-N bridge arm leads out a phase-N output of the power converter. The phase-N bridge arm may include a first switching transistor Q41 and a fourth switching transistor Q44 that are connected in series. The first switching transistor Q41 and the fourth switching transistor Q44 that are connected in series are connected in parallel to two ends of the first capacitor C1 and the second capacitor C2 that are connected in series. In addition, a connection end of the first switching transistor Q41 and the fourth switching transistor Q44 is connected to the connection end of the first capacitor C1 and the second capacitor C2 through a second switching transistor Q42 and a third switching transistor Q43 that are connected in reverse series. In addition, the connection end of the first switching transistor Q41 and the fourth switching transistor Q44 may lead out the phase-N output.

In the power converters shown in FIG. 3 to FIG. 5, a short circuit may occur on the switching transistor in each bridge arm. For example, the phase-A bridge arm in the power converter shown in FIG. 3 is used as an example. When the first switching transistor Q11 is short-circuited, if the second switching transistor Q12 is turned on and a direct current busbar side normally supplies power, the positive direct current busbar BUS+ is short-circuited, the first capacitor C1 cannot be normally charged, and the second switching transistor Q12 bears an excessively large short-circuit current, which affects normal working of the power converter. Alternatively, when the first switching transistor Q11 is short-circuited, if the fourth switching transistor Q14 is turned on and a direct current busbar side normally supplies power, the positive direct current busbar BUS+ and the negative direct current busbar BUS- are short-circuited, the first capacitor C1 and the second capacitor C2 both cannot be normally charged, and the fourth switching transistor Q14 bears an excessively large short-circuit current, which affects normal working of the power converter.

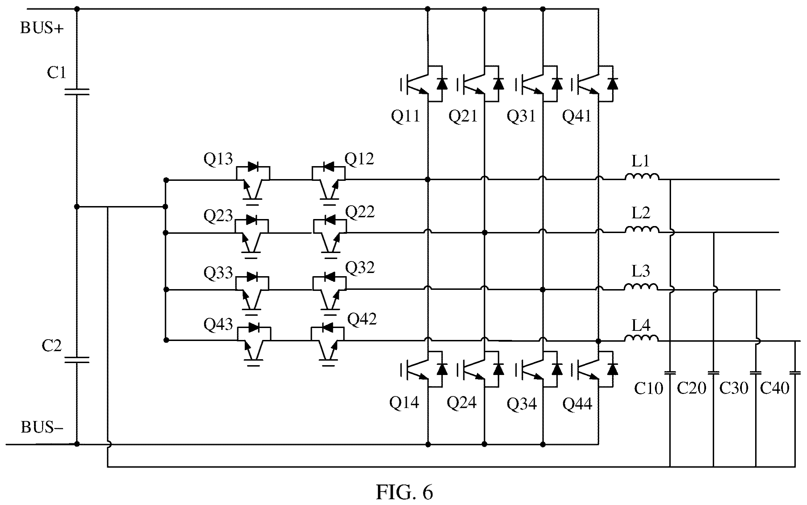

In addition, in the power converters shown in FIG. 3 to FIG. 5, the connection end of the first switching transistor and the fourth switching transistor in each bridge arm is further connected to the connection end of the first capacitor and the second capacitor through a filter capacitor and a filter inductor. For example, the power converter shown in FIG. 5 is used as an example. FIG. 6 is a diagram of another structure of the power converter according to this application. As shown in FIG. 6, in the power converter in FIG. 6, the connection end of the first switching transistor Q11 and the fourth switching transistor Q14 in the phase-A bridge arm is connected to the connection end of the first capacitor C1 and the second capacitor C2 through a filter inductor L1 and a filter capacitor C10. A connection end of the first switching transistor Q21 and the fourth switching transistor Q24 in the phase-B bridge arm is connected to the connection end of the first capacitor C1 and the second capacitor C2 through a filter inductor L2 and a filter capacitor C20. A connection end of the first switching transistor Q31 and the fourth switching transistor Q34 in the phase-C bridge arm is connected to the connection end of the first capacitor C1 and the second capacitor C2 through a filter inductor L3 and a filter capacitor C30. A connection end of the first switching transistor Q41 and the fourth switching transistor Q44 in the phase-N bridge arm is connected to the connection end of the first capacitor C1 and the second capacitor C2 through the filter inductor L4 and the filter capacitor C40.

As described in the foregoing embodiments and with reference to FIG. 3 to FIG. 5, the technical solutions provided in this application are applicable to fault switching transistor detection performed after the power converter is started and before the power converter formally works. Specifically, in the power converter provided in this application, the power converter includes a controller (not shown in FIG. 3 to FIG. 5), at least one bridge arm, and a first capacitor and a second capacitor that are connected in series. The first capacitor is connected to a positive direct current busbar, and the second capacitor is connected to a negative direct current busbar. Before the power converter is started and works, a direct current side of the power converter is not connected to a direct current power supply, and an alternating current side of the power converter is not connected to a load or a power grid, and the entire power converter is powered off inside. After the power converter is started and before the power converter formally works, for example, before a direct current from an energy storage battery serving as the direct current power supply is input and is converted to an alternating current through inversion, and the alternating current is output to the load or power grid, whether the switching transistor in the power converter is normal needs to be detected. This prevents a short-circuit fault due to a short circuit from occurring in the switching transistor in the power converter, which endangers device safety.

In the technical solution provided in this application, the controller selects at least one of the first capacitor and the second capacitor as a target capacitor, selects at least one switching transistor from switching transistors in each phase bridge arm as a target switching transistor, and after controlling the target switching transistor to be turned on, charges or discharges the target capacitor. In this process, the controller determines, based on whether a charging or discharging process of the target capacitor is normal, whether a specific switching transistor in each phase bridge arm is short-circuited or open-circuited. Specifically, the power converter shown in FIG. 5 is used as an example. After the power converter is started, the controller in the power converter first controls the target switching transistor to be turned on. The target switching transistor is at least one of a first switching transistor, a second switching transistor, a third switching transistor, and a fourth switching transistor in each bridge arm. For example, the target switching transistor is the first switching transistor, and in this case, the first switching transistor Q11 in the phase-A bridge arm, the first switching transistor Q21 in the phase-B bridge arm, the first switching transistor Q31 in the phase-C bridge arm, and the first switching transistor Q41 in the phase-N bridge arm are target switching transistors. At an initial moment after the power converter is started, a voltage across two ends of the first capacitor C1 and a voltage across two ends of the second capacitor C2 are zero, and after the target switching transistor is controlled to be turned on, the target capacitor starts to be charged. The target capacitor is at least one of the first capacitor C1 and the second capacitor C2, and the other switching transistors other than the target switching transistor in each bridge arm remain off. Then, after the target capacitor is charged, and when the voltage across the two ends of the target capacitor does not reach the voltage threshold, the controller determines that a switching transistor in the current power converter is short-circuited, and outputs the information indicating that the switching transistor short-circuit fault exists in each bridge arm. The faulty switching transistor is detected before the power converter works. This prevents an abnormal working condition such as a busbar short-circuit or short-circuit fault spreading from occurring in a working process of the power converter, and improves working reliability of the power converter.

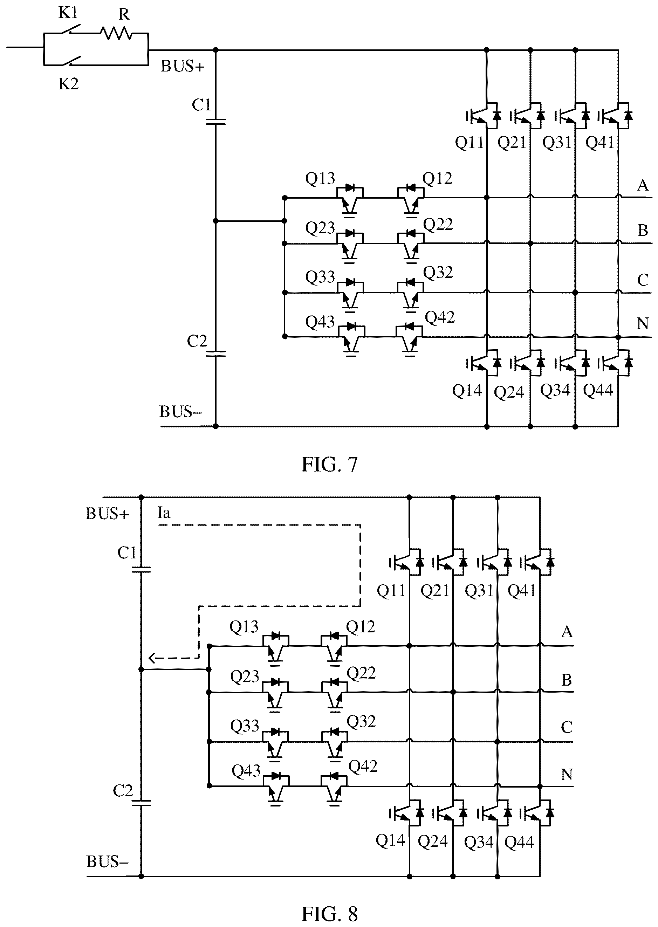

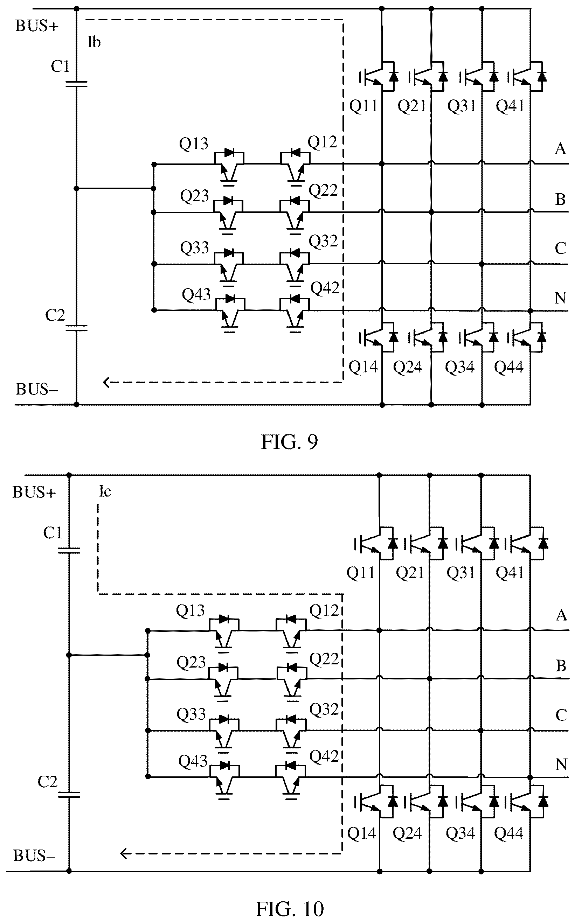

In some feasible implementations, the power converter includes a soft-start circuit, and the soft-start circuit may include a soft-start switch and a resistor that are connected in series to the positive direct current busbar or the negative direct current busbar. The controller is configured to: when a voltage across two ends of the first capacitor and a voltage across two ends of the second capacitor are zero, after controlling the first switching transistor in each bridge arm to remain on, control the soft-start switch to be turned on, to connect the first capacitor and the second capacitor to the direct current power supply to charge the first capacitor and the second capacitor by using the direct current power supply. The controller is further configured to: after the first capacitor is charged, and when the voltage across the two ends of the first capacitor does not reach the voltage threshold, output information indicating that the third switching transistor is short-circuited, or after the first capacitor and the second capacitor are charged, and when the voltage across the two ends of the first capacitor and the voltage across the two ends of the second capacitor both do not reach the voltage threshold, output information indicating that the fourth switching transistor is short-circuited. FIG. 7 is a diagram of another structure of the power converter according to this application. As shown in FIG. 7, the power converter in FIG. 7 includes four bridge arms. For a structure of each bridge arm, refer to FIG. 5. The power converter may further include a soft-start circuit. The soft-start circuit includes a soft-start switch K1 and a resistor R. The soft-start switch K1 and the resistor R may be connected in series to the positive direct current busbar BUS+ or the negative direct current busbar BUS-. An example in which the soft-start switch K1 and the resistor R are connected in series to the positive direct current busbar BUS+ is used. In a faulty switching transistor detection process, when the voltage across the two ends of the first capacitor C1 and the voltage across the two ends of the second capacitor C2 are zero, the controller controls the first switching transistor in each bridge arm to remain on, for example, controls the first switching transistor Q11, the first switching transistor Q21, the first switching transistor Q31, and the first switching transistor Q41 to be turned on. Then, the soft-start switch K1 is controlled to be turned on, to connect the first capacitor C1 and the second capacitor C2 to the direct current power supply. In this case, the first capacitor C1 and the second capacitor C2 are charged by a direct current provided by the direct current power supply. The soft-start circuit may be connected in parallel to a switch K2. The switch K2 is configured to be turned on after faulty switching transistor detection is completed, to connect the power converter to the direct current power supply. Herein, because the soft-start circuit includes the resistor R, the resistor R may limit an impulse current when the power converter is powered on, so that in a charging process of the first capacitor C1 and the second capacitor C2, a voltage change rate across the two ends of the first capacitor C1 and a voltage change rate across the two ends of the second capacitor C2 are less than a specified threshold. This avoids a transient voltage jump across the two ends of the first capacitor C1 and a transient voltage jump across the two ends of the second capacitor C2. In addition, when a short-circuited switching transistor exists in the bridge arm, this prevents a large current from being connected, which causes overcurrent damage to some switching transistors. The controller is further configured to: after the first capacitor C1 is charged, and when it is detected that the voltage across the two ends of the first capacitor C1 is not synchronously boosted, or when the voltage across the two ends of the first capacitor C1 does not reach the voltage threshold, determine that the third switching transistor in at least one of the plurality bridge arms is short-circuited, and output the information indicating that the third switching transistor is short-circuited. For example, an example in which the third switching transistor Q13 in the phase-A bridge arm is short-circuited is used as an example. FIG. 8 is a diagram of the short-circuited switching transistor in a power converter according to this application. As shown in FIG. 8, after controlling the first switching transistor Q11, the first switching transistor Q21, the first switching transistor Q31, and the first switching transistor Q41 to be turned on, the controller controls the soft-start switch K1 to be turned on, to connect the first capacitor C1 and the second capacitor C2 to the direct current power supply. The first capacitor C1 and the second capacitor C2 are charged by the direct current provided by the direct current power supply. If the third switching transistor Q13 is short-circuited, and the second switching transistor Q12 is turned off, a diode connected in parallel to the second switching transistor Q12 may conduct a current flowing from the connection end of the first switching transistor Q11 and the fourth switching transistor Q14 to the connection end of the first capacitor C1 and the second capacitor C2. Therefore, the third switching transistor Q13 and the second switching transistor Q12 both cannot cut off the current flowing from the connection end of the first switching transistor Q11 and the fourth switching transistor Q14 to the connection end of the first capacitor C1 and the second capacitor C2, the first capacitor C1 is short-circuited, and a short-circuit current Ia flows out from the positive direct current busbar BUS+, and flows to the second capacitor C2 sequentially through the first switching transistor Q11, the second switching transistor Q12, and the third switching transistor Q13. The first capacitor C1 cannot be normally charged, but the second capacitor C2 can be normally charged. The controller is further configured to: after the first capacitor C1 and the second capacitor C2 are charged, and when it is detected that the voltage across the two ends of the first capacitor C1 and the voltage across the two ends of the second capacitor C2 are both not synchronously boosted, or when the voltage across the two ends of the first capacitor C1 and the voltage across the two ends of the second capacitor C2 both do not reach the voltage threshold, determine that the fourth switching transistor in at least one of the plurality bridge arms is short-circuited, and output the information indicating that the fourth switching transistor is short-circuited. For example, an example in which the fourth switching transistor Q14 in the phase-A bridge arm is short-circuited is used as an example. FIG. 9 is a diagram of the short-circuited switching transistor in a power converter according to this application. As shown in FIG. 9, after controlling the first switching transistor Q11, the first switching transistor Q21, the first switching transistor Q31, and the first switching transistor Q41 to be turned on, the controller controls the soft-start switch K1 to be turned on, to connect the first capacitor C1 and the second capacitor C2 to the direct current power supply. The first capacitor C1 and the second capacitor C2 are charged by the direct current provided by the direct current power supply. If the fourth switching transistor Q14 is short-circuited, the fourth switching transistor Q14 cannot cut off a current flowing from the positive direct current busbar BUS+ to the negative direct current busbar BUS-, the first capacitor C1 and the second capacitor C2 are short-circuited, and a short-circuit current Ib flows out from the positive direct current busbar BUS+, and flows to the negative direct current busbar BUS- sequentially through the first switching transistor Q11 and the fourth switching transistor Q14. The first capacitor C1 and the second capacitor C2 both cannot be normally charged.

In some feasible implementations, the controller is configured to: when the voltage across the two ends of the first capacitor and the voltage across the two ends of the second capacitor are zero, after controlling the fourth switching transistor in each bridge arm to remain on, control the soft-start switch to be turned on, to connect the first capacitor and the second capacitor to the direct current power supply to charge the first capacitor and the second capacitor by using the direct current power supply. The controller is further configured to: after the second capacitor is charged, and when the voltage across the two ends of the second capacitor does not reach the voltage threshold, output information indicating that the second switching transistor is short-circuited, or after the first capacitor and the second capacitor are charged, and when the voltage across the two ends of the first capacitor and the voltage across the two ends of the second capacitor both do not reach the voltage threshold, output information indicating that the first switching transistor is short-circuited. Still with reference to FIG. 7, in the faulty switching transistor detection process, when the voltage across the two ends of the first capacitor C1 and the voltage across the two ends of the second capacitor C2 are zero, the controller controls the fourth switching transistor in each bridge arm to remain on, for example, controls the fourth switching transistor Q14, the fourth switching transistor Q24, the fourth switching transistor Q34, and the fourth switching transistor Q44 to be turned on. Then, the soft-start switch K1 is controlled to be turned on, to connect the first capacitor C1 and the second capacitor C2 to the direct current power supply. In this case, the first capacitor C1 and the second capacitor C2 are charged by the direct current provided by the direct current power supply. Herein, because the soft-start circuit includes the resistor R, the resistor R may limit an impulse current when the power converter is powered on, so that in the charging process of the first capacitor C1 and the second capacitor C2, the voltage change rate across the two ends of the first capacitor C1 and the voltage change rate across the two ends of the second capacitor C2 are less than the specified threshold. This avoids the transient voltage jump across the two ends of the first capacitor C1 and the transient voltage jump across the two ends of the second capacitor C2. In addition, when a short-circuited switching transistor exists in the bridge arm, this prevents a large current from being connected, which causes overcurrent damage to some switching transistors. The controller is further configured to: after the second capacitor C2 is charged, and when it is detected that the voltage across the two ends of the second capacitor C2 is not synchronously boosted, or when the voltage across the two ends of the second capacitor C2 does not reach the voltage threshold, determine that the second switching transistor in at least one of the plurality bridge arms is short-circuited, and output the information indicating that the second switching transistor is short-circuited. For example, an example in which the second switching transistor Q12 in the phase-A bridge arm is short-circuited is used as an example. FIG. 10 is a diagram of the short-circuited switching transistor in a power converter according to this application. As shown in FIG. 10, after controlling the fourth switching transistor Q14, the fourth switching transistor Q24, the fourth switching transistor Q34, and the fourth switching transistor Q44 to be turned on, the controller controls the soft-start switch K1 to be turned on, to connect the first capacitor C1 and the second capacitor C2 to the direct current power supply. The first capacitor C1 and the second capacitor C2 are charged by the direct current provided by the direct current power supply. If the second switching transistor Q12 is short-circuited, and the third switching transistor Q13 is turned off, a diode connected in parallel to the third switching transistor Q13 may conduct a current flowing from the connection end of the first capacitor C1 and the second capacitor C2 to the connection end of the first switching transistor Q11 and the fourth switching transistor Q14. Therefore, the second switching transistor Q12 and the third switching transistor Q13 both cannot cut off the current flowing from the connection end of the first capacitor C1 and the second capacitor C2 to the connection end of the first switching transistor Q11 and the fourth switching transistor Q14, the second capacitor C2 is short-circuited, and a short-circuit current Ic flows out from the positive direct current busbar BUS+, and flows to the negative direct current busbar BUS- through the first capacitor C1 and sequentially through the third switching transistor Q13, the second switching transistor Q12, and the fourth switching transistor Q14. The second capacitor C2 cannot be normally charged, but the first capacitor C1 can be normally charged. The controller is further configured to: after the first capacitor C1 and the second capacitor C2 are charged, and when it is detected that the voltage across the two ends of the first capacitor C1 and the voltage across the two ends of the second capacitor C2 are both not synchronously boosted, or when the voltage across the two ends of the first capacitor C1 and the voltage across the two ends of the second capacitor C2 both do not reach the voltage threshold, determine that the first switching transistor in at least one of the plurality bridge arms is short-circuited, and output the information indicating that the first switching transistor is short-circuited. For example, an example in which the first switching transistor Q11 in the phase-A bridge arm is short-circuited is used. Still with reference to FIG. 9, after controlling the fourth switching transistor Q14, the fourth switching transistor Q24, the fourth switching transistor Q34, and the fourth switching transistor Q44 to be turned on, the controller controls the soft-start switch K1 to be turned on, to connect the first capacitor C1 and the second capacitor C2 to the direct current power supply. The first capacitor C1 and the second capacitor C2 are charged by the direct current provided by the direct current power supply. If the first switching transistor Q11 is short-circuited, the first switching transistor Q11 cannot cut off the current flowing from the positive direct current busbar BUS+ to the negative direct current busbar BUS-, the first capacitor C1 and the second capacitor C2 are short-circuited, and the short-circuit current Ib flows out from the positive direct current busbar BUS+, and flows to the negative direct current busbar BUS- sequentially through the first switching transistor Q11 and the fourth switching transistor Q14. The first capacitor C1 and the second capacitor C2 both cannot be normally charged.

Optionally, in the faulty switching transistor detection process, the controller may first control the first switching transistor in each bridge arm to remain on, control the soft-start switch to be turned on, to charge the first capacitor and the second capacitor, and perform short-circuit fault detection on the third switching transistor and the fourth switching transistor in each bridge arm based on a voltage change across the two ends of the first capacitor and a voltage change across the two ends of the second capacitor. If the third switching transistor and the fourth switching transistor in each bridge arm are both normal, the soft-start switch is controlled to be turned off, to discharge the first capacitor and the second capacitor until the voltage across the two ends of the first capacitor and the voltage across the two ends of the second capacitor are zero. Then, the controller controls the fourth switching transistor in each bridge arm to remain on, controls the soft-start switch to be turned on, to charge the first capacitor and the second capacitor, and performs short-circuit fault detection on the first switching transistor and the second switching transistor in each bridge arm based on the voltage change across the two ends of the first capacitor and the voltage change across the two ends of the second capacitor, to complete fault detection on all switching transistors in each bridge arm.

Optionally, in the faulty switching transistor detection process, the controller may alternatively first control the fourth switching transistor in each bridge arm to remain on, control the soft-start switch to be turned on, to charge the first capacitor and the second capacitor, and perform short-circuit fault detection on the first switching transistor and the second switching transistor in each bridge arm based on a voltage change across the two ends of the first capacitor and a voltage change across the two ends of the second capacitor. If the first switching transistor and the second switching transistor in each bridge arm are both normal, the soft-start switch is controlled to be turned off, to discharge the first capacitor and the second capacitor until the voltage across the two ends of the first capacitor and the voltage across the two ends of the second capacitor are zero. Then, the first switching transistor in each bridge arm is controlled to remain on, the soft-start switch is controlled to be turned on, to charge the first capacitor and the second capacitor, and short-circuit fault detection is performed on the third switching transistor and the fourth switching transistor in each bridge arm based on the voltage change across the two ends of the first capacitor and the voltage change across the two ends of the second capacitor, to complete fault detection on all switching transistors in each bridge arm.

In some feasible implementations, a discharge circuit may be connected in parallel to the two ends of the first capacitor and the second capacitor in the power converter. In a process in which the controller controls the soft-start switch to be turned off to discharge the first capacitor and the second capacitor, the discharge circuit may be used to accelerate discharge of the first capacitor and the second capacitor until the voltage across the two ends of the first capacitor and the voltage across the two ends of the second capacitor are zero. Herein, the discharge circuit may include at least one resistor, or the discharge circuit may be an auxiliary power supply, and is configured to accelerate electric energy consumption speeds of the first capacitor and the second capacitor in a process of discharging the first capacitor and the second capacitor.

In some feasible implementations, when controlling the first switching transistor in each bridge arm to remain on, the controller controls the soft-start switch to be turned on, to charge the first capacitor and the second capacitor, and performs short-circuit fault detection on the third switching transistor and the fourth switching transistor in each bridge arm based on the voltage change across the two ends of the first capacitor and the voltage change across the two ends of the second capacitor. If the first switching transistor is open-circuited, after the controller controls the first switching transistor in the bridge arm to remain on, no current can flow through the first switching transistor. As a result, when the fourth switching transistor is short-circuited, the voltage across the first capacitor and the voltage across the second capacitor can still be normally boosted. That is, after the first capacitor and the second capacitor are charged, the voltage across the two ends of the first capacitor and the voltage across the two ends of the second capacitor are both greater than or equal to the voltage threshold. The power converter shown in FIG. 7 is used as an example. If the first switching transistor Q11 in the phase-A bridge arm is open-circuited, after the first switching transistor Q11 is controlled to remain on, no current can flow through the first switching transistor Q11. As a result, when the fourth switching transistor Q14 is short-circuited, the soft-start switch is controlled to be turned on to charge the first capacitor C1 and the second capacitor C2, and the voltage across the first capacitor C1 and the voltage across the second capacitor C2 can still be normally boosted. If whether the fourth switching transistor Q14 is short-circuited cannot be normally detected because the first switching transistor Q11 is open-circuited, a short-circuit loop is formed because the fourth switching transistor Q14 is short-circuited during normal working of the power converter. As a result, the second capacitor C2 cannot be normally charged, and some switching transistors bear an excessively large short-circuit current. However, if the first switching transistor Q11 is open-circuited, and the second switching transistor Q12 or the third switching transistor Q13 is short-circuited, a short-circuit loop damaging a component is not formed during normal working of the power converter. Therefore, after the first capacitor C1 and the second capacitor C2 are charged, and when the voltage across the two ends of the first capacitor C1 and the voltage across the two ends of the second capacitor C2 are both greater than or equal to the voltage threshold, short-circuit fault detection is performed on the fourth switching transistor Q14 for a second time. Specifically, after controlling the first switching transistor Q11 to remain on, the controller controls the soft-start switch to be turned on, to connect the first capacitor C1 and the second capacitor C2 to the direct current power supply to charge the first capacitor C1 and the second capacitor C2 by using the direct current power supply. Then, if the voltage across the two ends of the first capacitor C1 and the voltage across the two ends of the second capacitor C2 are both greater than or equal to the voltage threshold, the controller controls the soft-start switch to be turned off, to disconnect the first capacitor C1 and the second capacitor C2 from the direct current power supply to enable the discharge circuit to discharge the first capacitor C1 and the second capacitor C2. When the first capacitor C1 and the second capacitor C2 are discharged until the voltage across the two ends of the first capacitor C1 and the voltage across the two ends of the second capacitor C2 are zero, the second switching transistor Q12 is controlled to remain on, and the soft-start switch is controlled to be turned on, to connect the first capacitor C1 and the second capacitor C2 to the direct current power supply to charge the first capacitor C1 and the second capacitor C2 by using the direct current power supply. In this case, if the fourth switching transistor Q14 is short-circuited, the second capacitor C2 is short-circuited, and a short-circuit current flows out from the positive direct current busbar BUS+, and flows to the negative direct current busbar BUS- sequentially through the first capacitor C1, the third switching transistor Q13, the second switching transistor Q12, and the fourth switching transistor Q14. The second capacitor C2 cannot be normally charged. For a specific short-circuit path, refer to the description in FIG. 10. After the second capacitor is charged, and when the voltage across the two ends of the second capacitor does not reach the voltage threshold, the controller outputs the information indicating that the fourth switching transistor is short-circuited. This can avoid a case in which whether the fourth switching transistor is short-circuited cannot be normally detected when the first switching transistor is open-circuited, thereby improving accuracy of short-circuit fault detection of the switching transistor.

Similarly, when controlling the fourth switching transistor in each bridge arm to remain on, the controller controls the soft-start switch to be turned on, to charge the first capacitor and the second capacitor, and performs short-circuit fault detection on the first switching transistor and the second switching transistor in each bridge arm based on the voltage change across the two ends of the first capacitor and the voltage change across the two ends of the second capacitor. If the fourth switching transistor is open-circuited, after the controller controls the fourth switching transistor in the bridge arm to remain on, no current can flow through the fourth switching transistor. As a result, when the first switching transistor is short-circuited, the voltage across the first capacitor and the voltage across the second capacitor can still be normally boosted. That is, after the first capacitor and the second capacitor are charged, the voltage across the two ends of the first capacitor and the voltage across the two ends of the second capacitor are both greater than or equal to the voltage threshold. The power converter shown in FIG. 7 is used as an example. If the fourth switching transistor Q14 in the phase-A bridge arm is open-circuited, after the fourth switching transistor Q14 is controlled to remain on, no current can flow through the fourth switching transistor Q14. As a result, when the first switching transistor Q11 is short-circuited, the soft-start switch is controlled to be turned on to charge the first capacitor C1 and the second capacitor C2, and the voltage across the first capacitor C1 and the voltage across the second capacitor C2 can still be normally boosted. If whether the first switching transistor Q11 is short-circuited cannot be normally detected because the fourth switching transistor Q14 is open-circuited, a short-circuit loop is formed because the first switching transistor Q11 is short-circuited during normal working of the power converter. As a result, the first capacitor C1 cannot be normally charged, and some switching transistors bear an excessively large short-circuit current. Therefore, after the first capacitor C1 and the second capacitor C2 are charged, and when the voltage across the two ends of the first capacitor C1 and the voltage across the two ends of the second capacitor C2 are both greater than or equal to the voltage threshold, short-circuit fault detection is separately performed on the first switching transistor Q11. Specifically, after controlling the fourth switching transistor Q14 to remain on, the controller controls the soft-start switch to be turned on, to connect the first capacitor C1 and the second capacitor C2 to the direct current power supply to charge the first capacitor C1 and the second capacitor C2 by using the direct current power supply. Then, if the voltage across the two ends of the first capacitor C1 and the voltage across the two ends of the second capacitor C2 are both greater than or equal to the voltage threshold, the controller controls the soft-start switch to be turned off, to disconnect the first capacitor C1 and the second capacitor C2 from the direct current power supply, to enable the discharge circuit to discharge the first capacitor C1 and the second capacitor C2. In addition, when the first capacitor C1 and the second capacitor C2 are discharged until the voltage across the two ends of the first capacitor C1 and the voltage across the two ends of the second capacitor C2 are zero, the third switching transistor Q13 is controlled to remain on, and the soft-start switch is controlled to be turned on, to connect the first capacitor C1 and the second capacitor C2 to the direct current power supply to charge the first capacitor C1 and the second capacitor C2 by using the direct current power supply. In this case, if the first switching transistor Q11 is short-circuited, the first capacitor C1 is short-circuited, and a short-circuit current flows out from the positive direct current busbar BUS+, and flows to the second capacitor C2 sequentially through the first capacitor C1, the second switching transistor Q12, and the third switching transistor Q13. The first capacitor C1 cannot be normally charged. For a specific short-circuit path, refer to the description in FIG. 10. After the first capacitor is charged, and when the voltage across the two ends of the first capacitor does not reach the voltage threshold, the controller outputs the information indicating that the first switching transistor is short-circuited. This can avoid a case in which whether the first switching transistor is short-circuited cannot be normally detected when the fourth switching transistor is open-circuited, thereby improving accuracy of short-circuit fault detection of the switching transistor.

In some feasible implementations, the controller is configured to: control the first switching transistor in each bridge arm to remain on, control the soft-start switch to be turned on, to charge the first capacitor and the second capacitor, and perform short-circuit fault detection on the third switching transistor and the fourth switching transistor in each bridge arm based on the voltage change across the two ends of the first capacitor and the voltage change across the two ends of the second capacitor. Alternatively, the controller is configured to: control the fourth switching transistor in each bridge arm to remain on, control the soft-start switch to be turned on, to charge the first capacitor and the second capacitor, and perform short-circuit fault detection on the first switching transistor and the second switching transistor in each bridge arm based on the voltage change across the two ends of the first capacitor and the voltage change across the two ends of the second capacitor. If it is detected that the short-circuit fault does not occur on the first switching transistor or the fourth switching transistor, short-circuit fault detection may be performed on the first switching transistor or the fourth switching transistor for a second time, to avoid misjudgment of the short-circuit fault caused when the first switching transistor or the fourth switching transistor is open-circuited. Specifically, after controlling the first switching transistor or the fourth switching transistor in each bridge arm to remain on, the controller controls the soft-start switch to be turned on, to connect the first capacitor and the second capacitor to the direct current power supply to charge the first capacitor and the second capacitor by using the direct current power supply. Then, if the voltage across the two ends of the first capacitor and the voltage across the two ends of the second capacitor are both greater than or equal to the voltage threshold, the controller controls the soft-start switch to be turned off, to disconnect the first capacitor and the second capacitor from the direct current power supply, to enable the discharge circuit to discharge the first capacitor and the second capacitor. In addition, when the first capacitor and the second capacitor are discharged until the voltage across the two ends of the first capacitor and the voltage across the two ends of the second capacitor are zero, the controller controls the soft-start switch to be turned on, to connect the first capacitor and the second capacitor to the direct current power supply to charge the first capacitor and the second capacitor by using the direct current power supply. In this case, the switching transistors in each bridge arm are in an off state. If the first switching transistor and the fourth switching transistor are short-circuited, the first capacitor and the second capacitor are short-circuited, and the short-circuit current flows out from the positive direct current busbar, and flows to the negative direct current busbar sequentially through the first switching transistor and the fourth switching transistor. The first capacitor and the second capacitor both cannot be normally charged. For a specific short-circuit path, refer to the description in FIG. 9. If the voltage across the two ends of the first capacitor and the voltage across the two ends of the second capacitor both do not reach the voltage threshold, the controller outputs the information indicating that the first switching transistor and the fourth switching transistor are short-circuited. Further, after the first capacitor and the second capacitor are charged, if a voltage across two ends of a filter capacitor connected to any bridge arm is equal to the voltage across the two ends of the first capacitor or the voltage across the two ends of the second capacitor, the information indicating that the first switching transistor or the fourth switching transistor is short-circuited is output. Specifically, if the voltage across the two ends of the filter capacitor connected to any bridge arm is equal to the voltage across the two ends of the first capacitor, the information indicating that the first switching transistor is shot-circuited is output. If the voltage across the two ends of the filter capacitor connected to any bridge arm is equal to the voltage across the two ends of the second capacitor, the information indicating that the fourth switching transistor is shot-circuited is output. Still with reference to the power converter shown in FIG. 6, after the first capacitor C1 and the second capacitor C2 are charged, if a voltage across two ends of the filter inductor L1 connected to the phase-A bridge arm is equal to the voltage across the two ends of the first capacitor C1, it is determined that the first switching transistor Q11 in the phase-A bridge arm is short-circuited, so that the first capacitor C1 and the filter inductor L1 are connected in parallel, and the information indicating that the first switching transistor is short-circuited is output. Alternatively, if a voltage across two ends of the filter inductor L1 connected to the phase-A bridge arm is equal to the voltage across the two ends of the second capacitor C2, it is determined that the second switching transistor Q12 in the phase-A bridge arm is short-circuited, so that the second capacitor C2 and the filter inductor L1 are connected in parallel, and the information indicating that the second switching transistor is short-circuited is output.

In some feasible implementations, the power converter further includes an electric energy transfer unit. The controller is configured to: after performing short-circuit fault detection on the third switching transistor and the fourth switching transistor in each bridge arm, control the electric energy transfer unit to discharge one of the first capacitor and the second capacitor, and then charge the discharged first capacitor or second capacitor to perform short-circuit fault detection on the first switching transistor or the second switching transistor. Specifically, the controller controls the first switching transistor in each bridge arm to remain on, controls the soft-start switch to be turned on, to charge the first capacitor and the second capacitor, and performs short-circuit fault detection on the third switching transistor and the fourth switching transistor in each bridge arm based on the voltage change across the two ends of the first capacitor and the voltage change across the two ends of the second capacitor. After the first capacitor and the second capacitor are charged, and if the voltage across the two ends of the first capacitor and the voltage across the two ends of the second capacitor are both greater than or equal to the voltage threshold, that is, the third switching transistor and the fourth switching transistor in each bridge arm are both normal, the controller controls the electric energy transfer unit and discharges the first capacitor by using the electric energy transfer unit. When the first capacitor is discharged until the voltage across the two ends of the first capacitor is zero, the controller controls the third switching transistor in each bridge arm to remain on, and controls the electric energy transfer unit and charge the first capacitor by using the electric energy transfer unit. After the first capacitor is charged, and when the voltage across the two ends of the first capacitor does not reach the voltage threshold, the controller outputs the information indicating that the first switching transistor is short-circuited. Alternatively, when the third switching transistor and the fourth switching transistor in each bridge arm are both normal, the controller controls the electric energy transfer unit and discharges the second capacitor by using the electric energy transfer unit. When the second capacitor is discharged until the voltage across the two ends of the second capacitor is zero, the controller controls the fourth switching transistor in each bridge arm to remain on, and controls the electric energy transfer unit and charge the second capacitor by using the electric energy transfer unit. After the second capacitor is charged, and when the voltage across the two ends of the second capacitor does not reach the voltage threshold, the controller outputs the information indicating that the second switching transistor is short-circuited.

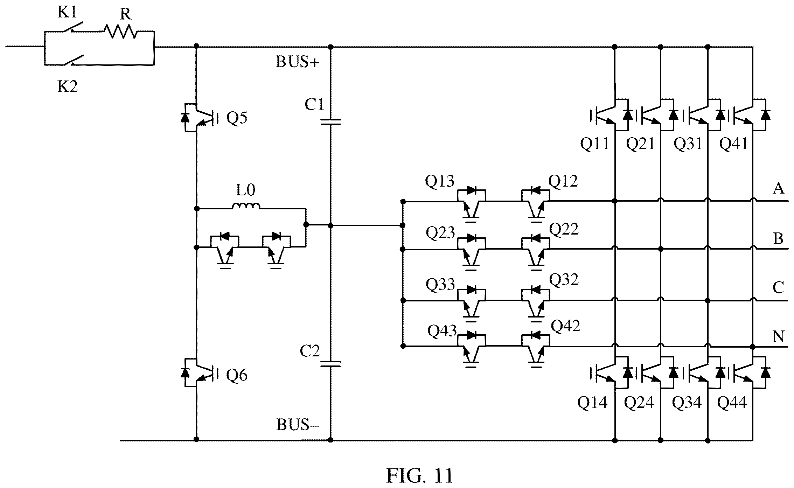

It may be understood that when the controller performs short-circuit fault detection on the third switching transistor and the fourth switching transistor in each bridge arm, and the third switching transistor and the fourth switching transistor in each bridge arm are both normal, the controller may first perform short-circuit fault detection on the first switching transistor in each bridge arm, and then perform short-circuit fault detection on the second switching transistor in each bridge arm, to complete fault detection on all switching transistors in each bridge arm. Alternatively, the controller may first perform short-circuit fault detection on the second switching transistor in each bridge arm, and then perform short-circuit fault detection on the first switching transistor in each bridge arm, to complete fault detection on all switching transistors in each bridge arm. An example in which short-circuit fault detection is first performed on the first switching transistor in each bridge arm, and then short-circuit fault detection is performed on the second switching transistor in each bridge arm is used. Specifically, the electric energy transfer unit may a balance bridge arm. The balance bridge arm includes an inductor, and a fifth switching transistor and a sixth switching transistor that are connected in series. The fifth switching transistor is connected to the positive direct current busbar, the sixth switching transistor is connected to the negative direct current busbar, and a connection end of the fifth switching transistor and the sixth switching transistor is connected to the connection end of the first capacitor and the second capacitor through the inductor. FIG. 11 is a diagram of another structure of the power converter according to this application. As shown in FIG. 11, the power converter in FIG. 11 includes four bridge arms. For a structure of each bridge arm, refer to FIG. 5. The power converter may further include the soft-start circuit and the electric energy transfer unit. The soft-start circuit includes the soft-start switch K1 and the resistor R. The soft-start switch K1 and the resistor R may be connected in series to the positive direct current busbar BUS+. The electric energy transfer unit may be the balance bridge arm. The balance bridge arm includes an inductor L0, and a switching transistor Q5 and a switching transistor Q6 that are connected in series. The switching transistor Q5 is connected to the positive direct current busbar BUS+, the switching transistor Q6 is connected to the negative direct current busbar BUS-, and a connection end of the switching transistor Q5 and the switching transistor Q6 is connected to the connection end of the first capacitor C1 and the second capacitor C2 through the inductor L0. When the controller completes short-circuit fault detection on the third switching transistor and the fourth switching transistor in each bridge arm, and the third switching transistor and the fourth switching transistor in each bridge arm are both normal, after the first capacitor C1 and the second capacitor C2 are charged, the voltage across the two ends of the first capacitor C1 and the voltage across the two ends of the second capacitor C2 are both greater than or equal to the voltage threshold, and the controller may control the switching transistor Q5 and the switching transistor Q6 to act, to transfer electric energy of the first capacitor C1 to the second capacitor C2 through the inductor L0 to discharge the first capacitor C1. When the first capacitor C1 is discharged until the voltage across the two ends of the first capacitor C1 is zero, the controller controls the third switching transistor in each bridge arm to remain on, that is, controls the third switching transistor Q13, the third switching transistor Q23, the third switching transistor Q33, and the third switching transistor Q43 to be turned on. Then, the switching transistor Q5 and the switching transistor Q6 are controlled to act, so that electric energy of the second capacitor C2 is transferred to the first capacitor C1 through the inductor L0 to charge the first capacitor C1. After the first capacitor C1 is charged, and when the voltage across the two ends of the first capacitor C1 does not reach the voltage threshold, the controller determines that the first switching transistor in at least one of the plurality of bridge arms is short-circuited, and outputs the information indicating that the first switching transistor is short-circuited. After the first capacitor C1 is charged, if the voltage across the two ends of the first capacitor C1 is greater than or equal to the voltage threshold, that is, the first switching transistor in each bridge arm is normal, the controller controls the switching transistor Q5 and the switching transistor Q6 to act, to transfer the electric energy of the second capacitor C2 to the first capacitor C1 through the inductor L0 to discharge the second capacitor C2. When the second capacitor C2 is discharged until the voltage across the two ends of the second capacitor C2 is zero, the controller controls the fourth switching transistor in each bridge arm to remain on, that is, controls the fourth switching transistor Q14, the fourth switching transistor Q24, the fourth switching transistor Q34, and the fourth switching transistor Q44 to be turned on. Then, the switching transistor Q5 and the switching transistor Q6 are controlled to act, so that the electric energy of the first capacitor C1 is transferred to the second capacitor C2 through the inductor L0 to charge the second capacitor C2. After the second capacitor C2 is charged, and when the voltage across the two ends of the second capacitor C2 does not reach the voltage threshold, the controller determines that the second switching transistor in at least one of the plurality of bridge arms is short-circuited, and outputs the information indicating that the second switching transistor is short-circuited, to complete fault detection on all switching transistors in each bridge arm.

Further, when controlling the first switching transistor in each bridge arm to remain on, the controller controls the soft-start switch to be turned on, to charge the first capacitor and the second capacitor, and performs short-circuit fault detection on the third switching transistor and the fourth switching transistor in each bridge arm based on the voltage change across the two ends of the first capacitor and the voltage change across the two ends of the second capacitor. If the first switching transistor is open-circuited, after the controller controls the first switching transistor in the bridge arm to remain on, no current can flow through the first switching transistor. As a result, when the fourth switching transistor is short-circuited, the voltage across the first capacitor and the voltage across the second capacitor can still be normally boosted. That is, after the first capacitor and the second capacitor are charged, the voltage across the two ends of the first capacitor and the voltage across the two ends of the second capacitor are both greater than or equal to the voltage threshold, and misjudgment of the short-circuit fault of the fourth switching transistor also exists. Therefore, after fault detection is performed on all switching transistors in each bridge arm, short-circuit fault detection is performed on the fourth switching transistor for a second time. Specifically, the controller may control the switching transistor Q5 and the switching transistor Q6 to act, to transfer the electric energy of the second capacitor C2 to the first capacitor C1 through the inductor L0 to discharge the second capacitor C2. When the second capacitor C2 is discharged until the voltage across the two ends of the second capacitor C2 is zero, the controller controls the second switching transistor in each bridge arm to remain on, that is, controls the second switching transistor Q12, the second switching transistor Q22, the second switching transistor Q32, and the second switching transistor Q42 to be turned on. Then, the switching transistor Q5 and the switching transistor Q6 are controlled to act, so that the electric energy of the first capacitor C1 is transferred to the second capacitor C2 through the inductor L0 to charge the second capacitor C2. After the second capacitor C2 is charged, and when the voltage across the two ends of the second capacitor C2 does not reach the voltage threshold, the controller determines that the fourth switching transistor in at least one of the plurality of bridge arms is short-circuited, and outputs the information indicating that the fourth switching transistor is short-circuited.

In some feasible implementations, when the controller performs short-circuit fault detection on the first switching transistor and the second switching transistor in each bridge arm, and the first switching transistor and the second switching transistor in each bridge arm are both normal, the controller may first perform short-circuit fault detection on the third switching transistor in each bridge arm, and then perform short-circuit fault detection on the fourth switching transistor in each bridge arm, to complete fault detection on all switching transistors in each bridge arm. Alternatively, the controller may first perform short-circuit fault detection on the fourth switching transistor in each bridge arm, and then perform short-circuit fault detection on the third switching transistor in each bridge arm, to complete fault detection on all switching transistors in each bridge arm. An example in which short-circuit fault detection is first performed on the third switching transistor in each bridge arm, and then short-circuit fault detection is performed on the fourth switching transistor in each bridge arm is used. Specifically, the electric energy transfer unit may be the balance bridge arm. The balance bridge arm includes the inductor, and the fifth switching transistor and the sixth switching transistor that are connected in series. The fifth switching transistor is connected to the positive direct current busbar, the sixth switching transistor is connected to the negative direct current busbar, and the connection end of the fifth switching transistor and the sixth switching transistor is connected to the connection end of the first capacitor and the second capacitor through the inductor. Still with reference to FIG. 11, when the controller completes short-circuit fault detection on the first switching transistor and the second switching transistor in each bridge arm, and the first switching transistor and the second switching transistor in each bridge arm are both normal, after the first capacitor C1 and the second capacitor C2 are charged, the voltage across the two ends of the first capacitor C1 and the voltage across the two ends of the second capacitor C2 are both greater than or equal to the voltage threshold, and the controller may control the switching transistor Q5 and the switching transistor Q6 to act, to transfer the electric energy of the first capacitor C1 to the second capacitor C2 through the inductor L0 to discharge the first capacitor C1. When the first capacitor C1 is discharged until the voltage across the two ends of the first capacitor C1 is zero, the controller controls the first switching transistor in each bridge arm to remain on, that is, controls the first switching transistor Q11, the first switching transistor Q21, the first switching transistor Q31, and the first switching transistor Q41 to be turned on. Then, the switching transistor Q5 and the switching transistor Q6 are controlled to act, so that electric energy of the second capacitor C2 is transferred to the first capacitor C1 through the inductor L0 to charge the first capacitor C1. After the first capacitor C1 is charged, and when the voltage across the two ends of the first capacitor C1 does not reach the voltage threshold, the controller determines that the third switching transistor in at least one of the plurality of bridge arms is short-circuited, and outputs the information indicating that the third switching transistor is short-circuited. After the first capacitor C1 is charged, if the voltage across the two ends of the first capacitor C1 is greater than or equal to the voltage threshold, that is, the third switching transistor in each bridge arm is normal, the controller controls the switching transistor Q5 and the switching transistor Q6 to act, to transfer the electric energy of the second capacitor C2 to the first capacitor C1 through the inductor L0 to discharge the second capacitor C2. When the second capacitor C2 is discharged until the voltage across the two ends of the second capacitor C2 is zero, the controller controls the second switching transistor in each bridge arm to remain on, that is, controls the second switching transistor Q12, the second switching transistor Q22, the second switching transistor Q32, and the second switching transistor Q42 to be turned on. Then, the switching transistor Q5 and the switching transistor Q6 are controlled to act, so that the electric energy of the first capacitor C1 is transferred to the second capacitor C2 through the inductor L0 to charge the second capacitor C2. After the second capacitor C2 is charged, and when the voltage across the two ends of the second capacitor C2 does not reach the voltage threshold, the controller determines that the fourth switching transistor in at least one of the plurality of bridge arms is short-circuited, and outputs the information indicating that the fourth switching transistor is short-circuited, to complete fault detection on all switching transistors in each bridge arm.

Further, when controlling the fourth switching transistor in each bridge arm to remain on, the controller controls the soft-start switch to be turned on, to charge the first capacitor and the second capacitor, and performs short-circuit fault detection on the first switching transistor and the second switching transistor in each bridge arm based on the voltage change across the two ends of the first capacitor and the voltage change across the two ends of the second capacitor. If the fourth switching transistor is open-circuited, after the controller controls the fourth switching transistor in the bridge arm to remain on, no current can flow through the fourth switching transistor. As a result, when the first switching transistor is short-circuited, the voltage across the first capacitor and the voltage across the second capacitor can still be normally boosted. That is, after the first capacitor and the second capacitor are charged, the voltage across the two ends of the first capacitor and the voltage across the two ends of the second capacitor are both greater than or equal to the voltage threshold, and misjudgment of the short-circuit fault of the first switching transistor also exists. Therefore, after fault detection is performed on all switching transistors in each bridge arm, short-circuit fault detection is performed on the first switching transistor for a second time. Specifically, the controller may control the switching transistor Q5 and the switching transistor Q6 to act, to transfer the electric energy of the first capacitor C1 to the second capacitor C2 through the inductor L0 to discharge the first capacitor C1. When the first capacitor C1 is discharged until the voltage across the two ends of the first capacitor C1 is zero, the controller controls the third switching transistor in each bridge arm to remain on, that is, controls the third switching transistor Q13, the third switching transistor Q23, the third switching transistor Q33, and the third switching transistor Q43 to be turned on. Then, the switching transistor Q5 and the switching transistor Q6 are controlled to act, so that electric energy of the second capacitor C2 is transferred to the first capacitor C1 through the inductor L0 to charge the first capacitor C1. After the first capacitor C1 is charged, and when the voltage across the two ends of the first capacitor C1 does not reach the voltage threshold, the controller determines that the first switching transistor in at least one of the plurality of bridge arms is short-circuited, and outputs the information indicating that the first switching transistor is short-circuited.

## Claims

1. A power converter, wherein the power converter comprises a controller, at least one bridge arm, and a first capacitor and a second capacitor that are connected in series, the first capacitor is connected to a positive direct current busbar, and the second capacitor is connected to a negative direct current busbar;
each of the at least one bridge arm comprises a first switching transistor, a second switching transistor, a third switching transistor, and a fourth switching transistor, the first switching transistor and the fourth switching transistor are connected in series and then connected in parallel to two ends of the first capacitor and the second capacitor that are connected in series, and a connection end of the first switching transistor and the fourth switching transistor is connected to a connection end of the first capacitor and the second capacitor through the second switching transistor and the third switching transistor that are connected in reverse series;
the controller is configured to: after the power converter is started, control a target switching transistor in each bridge arm to remain on, wherein the other switching transistors other than the target switching transistor in each bridge arm remain off, a target capacitor starts to be charged after the target switching transistor in each bridge arm is turned on, the target capacitor is at least one of the first capacitor and the second capacitor, and the target switching transistor is at least one of the first switching transistor, the second switching transistor, the third switching transistor, and the fourth switching transistor in each bridge arm; and
the controller is further configured to: after the target capacitor is charged, and when a voltage across two ends of the target capacitor does not reach a voltage threshold, output information indicating that a switching transistor short-circuit fault exists in each bridge arm.

2. The power converter according to claim 1, wherein the power converter comprises a soft-start switch and a resistor that are connected in series to the positive direct current busbar or the negative direct current busbar, the target capacitor is the first capacitor and the second capacitor, and the target switching transistor is the first switching transistor in each bridge arm; and
that the target capacitor starts to be charged after the target switching transistor in each bridge arm is turned on is specifically as follows:
after the first switching transistor in each bridge arm remains on, the controller controls the soft-start switch to be turned on, to connect the first capacitor and the second capacitor to a direct current power supply to start to charge the first capacitor and the second capacitor by using the direct current power supply; and
the controller is further configured to: after the direct current power supply charges the first capacitor and the second capacitor, and when a voltage across two ends of the first capacitor does not reach the voltage threshold, output information indicating that the third switching transistor is short-circuited, or after the direct current power supply charges the first capacitor and the second capacitor, and when a voltage across two ends of the first capacitor and a voltage across two ends of the second capacitor both do not reach the voltage threshold, output information indicating that the fourth switching transistor is short-circuited.

3. The power converter according to claim 1, wherein the power converter comprises a soft-start switch and a resistor that are connected in series to the positive direct current busbar or the negative direct current busbar, the target capacitor is the first capacitor and the second capacitor, and the target switching transistor is the fourth switching transistor in each bridge arm; and
that the target capacitor starts to be charged after the target switching transistor in each bridge arm is turned on is specifically as follows:
after the fourth switching transistor in each bridge arm remains on, the controller controls the soft-start switch to be turned on, to connect the first capacitor and the second capacitor to a direct current power supply to start to charge the first capacitor and the second capacitor by using the direct current power supply;
the controller is further configured to: after controlling the fourth switching transistor in each bridge arm to remain on, control the soft-start switch to be turned on, to connect the first capacitor and the second capacitor to the direct current power supply to charge the first capacitor and the second capacitor by using the direct current power supply; and
the controller is further configured to: after the direct current power supply charges the first capacitor and the second capacitor, and when a voltage across two ends of the second capacitor does not reach the voltage threshold, output information indicating that the second switching transistor is short-circuited, or after the direct current power supply charges the first capacitor and the second capacitor, and when a voltage across two ends of the first capacitor and a voltage across two ends of the second capacitor both do not reach the voltage threshold, output information indicating that the first switching transistor is short-circuited.

4. The power converter according to claim 2, wherein a discharge circuit is connected in parallel to the two ends of the first capacitor and the second capacitor, and the controller is configured to: after controlling the soft-start switch to be turned on, to connect the first capacitor and the second capacitor to the direct current power supply to charge the first capacitor and the second capacitor by using the direct current power supply,
if the voltage across the two ends of the first capacitor and the voltage across the two ends of the second capacitor are both greater than or equal to the voltage threshold, control the first switching transistor to be turned off, and control the soft-start switch to be turned off, to disconnect the first capacitor and the second capacitor from the direct current power supply to enable the discharge circuit to discharge the first capacitor and the second capacitor, when the first capacitor and the second capacitor are discharged until the voltage across the two ends of the first capacitor and the voltage across the two ends of the second capacitor are zero, control the second switching transistor in each bridge arm to remain on, and control the soft-start switch to be turned on, to connect the first capacitor and the second capacitor to the direct current power supply to charge the first capacitor and the second capacitor by using the direct current power supply, and after the second capacitor is charged, and when the voltage across the two ends of the second capacitor does not reach the voltage threshold, output the information indicating that the fourth switching transistor is short-circuited.

5. The power converter according to claim 3, wherein a discharge circuit is connected in parallel to the two ends of the first capacitor and the second capacitor, and the controller is configured to: after controlling the soft-start switch to be turned on, to connect the first capacitor and the second capacitor to the direct current power supply to charge the first capacitor and the second capacitor by using the direct current power supply,
if the voltage across the two ends of the first capacitor and the voltage across the two ends of the second capacitor are both greater than or equal to the voltage threshold, control the fourth switching transistor to be turned off, and control the soft-start switch to be turned off, to disconnect the first capacitor and the second capacitor from the direct current power supply to enable the discharge circuit to discharge the first capacitor and the second capacitor, when the first capacitor and the second capacitor are discharged until the voltage across the two ends of the first capacitor and the voltage across the two ends of the second capacitor are zero, control the third switching transistor in each bridge arm to remain on, and control the soft-start switch to be turned on, to connect the first capacitor and the second capacitor to the direct current power supply to charge the first capacitor and the second capacitor by using the direct current power supply, and after the first capacitor is charged, and when the voltage across the two ends of the first capacitor does not reach the voltage threshold, output the information indicating that the first switching transistor is short-circuited.

6. The power converter according to claim 2 or 3, wherein a discharge circuit is connected in parallel to the two ends of the first capacitor and the second capacitor, in each bridge arm, the connection end of the first switching transistor and the fourth switching transistor is further connected to the connection end of the first capacitor and the second capacitor through a filter capacitor, and the controller is configured to: after controlling the soft-start switch to be turned on, to connect the first capacitor and the second capacitor to the direct current power supply to charge the first capacitor and the second capacitor by using the direct current power supply,
the controller is further configured to: if the voltage across the two ends of the first capacitor and the voltage across the two ends of the second capacitor are both greater than or equal to the voltage threshold, control the target switching transistor to be turned off, and control the soft-start switch to be turned off, to disconnect the first capacitor and the second capacitor from the direct current power supply to enable the discharge circuit to discharge the first capacitor and the second capacitor, when the first capacitor and the second capacitor are discharged until the voltage across the two ends of the first capacitor and the voltage across the two ends of the second capacitor are zero, control the soft-start switch to be turned on, to connect the first capacitor and the second capacitor to the direct current power supply to charge the first capacitor and the second capacitor by using the direct current power supply, and after the first capacitor and the second capacitor are charged, if the voltage across the two ends of the first capacitor and the voltage across the two ends of the second capacitor both do not reach the voltage threshold, output information indicating that the first switching transistor and the fourth switching transistor are short-circuited; or
the controller is further configured to: if the voltage across the two ends of the first capacitor and the voltage across the two ends of the second capacitor are both greater than or equal to the voltage threshold, control the target switching transistor to be turned off, and control the soft-start switch to be turned off, to disconnect the first capacitor and the second capacitor from the direct current power supply to enable the discharge circuit to discharge the first capacitor and the second capacitor, when the first capacitor and the second capacitor are discharged until the voltage across the two ends of the first capacitor and the voltage across the two ends of the second capacitor are zero, control the soft-start switch to be turned on, to connect the first capacitor and the second capacitor to the direct current power supply to charge the first capacitor and the second capacitor by using the direct current power supply, and after the first capacitor and the second capacitor are charged, if a voltage across two ends of the filter capacitor is equal to the voltage across the two ends of the first capacitor or the voltage across the two ends of the second capacitor, output the information indicating that the first switching transistor or the fourth switching transistor is short-circuited.

7. The power converter according to claim 2 or 3, wherein the power converter further comprises an electric energy transfer unit, and the controller is configured to: after controlling the soft-start switch to be turned on, to connect the first capacitor and the second capacitor to the direct current power supply to charge the first capacitor and the second capacitor by using the direct current power supply,
if the voltage across the two ends of the first capacitor and the voltage across the two ends of the second capacitor are both greater than or equal to the voltage threshold, control the target switching transistor to be turned off, and control the electric energy transfer unit and discharge the first capacitor by using the electric energy transfer unit;
the controller is further configured to: when the first capacitor is discharged by using the electric energy transfer unit until the voltage across the two ends of the first capacitor is zero, control the third switching transistor in each bridge arm to remain on, and control the electric energy transfer unit and charge the first capacitor by using the electric energy transfer unit; and
the controller is further configured to: after the first capacitor is charged by using the electric energy transfer unit, if the voltage across the two ends of the first capacitor does not reach the voltage threshold, output the information indicating that the first switching transistor is short-circuited.

8. The power converter according to claim 2, wherein the power converter further comprises an electric energy transfer unit, and the controller is configured to: after controlling the soft-start switch to be turned on, to connect the first capacitor and the second capacitor to the direct current power supply to charge the first capacitor and the second capacitor by using the direct current power supply,
if the voltage across the two ends of the first capacitor and the voltage across the two ends of the second capacitor are both greater than or equal to the voltage threshold, control the first switching transistor to be turned off, and control the electric energy transfer unit and discharge the second capacitor by using the electric energy transfer unit;
the controller is further configured to: when the second capacitor is discharged by using the electric energy transfer unit until the voltage across the two ends of the second capacitor is zero, control the fourth switching transistor in each bridge arm to remain on, and control the electric energy transfer unit and charge the second capacitor by using the electric energy transfer unit; and
the controller is further configured to: after the second capacitor is charged by using the electric energy transfer unit, if the voltage across the two ends of the second capacitor does not reach the voltage threshold, output information indicating that the second switching transistor is short-circuited.

9. The power converter according to claim 3, wherein the power converter further comprises an electric energy transfer unit, and the controller is configured to: after controlling the soft-start switch to be turned on, to connect the first capacitor and the second capacitor to the direct current power supply to charge the first capacitor and the second capacitor by using the direct current power supply,
if the voltage across the two ends of the first capacitor and the voltage across the two ends of the second capacitor are both greater than or equal to the voltage threshold, control the fourth switching transistor to be turned off, and control the electric energy transfer unit and discharge the first capacitor by using the electric energy transfer unit;
the controller is further configured to: when the first capacitor is discharged by using the electric energy transfer unit until the voltage across the two ends of the first capacitor is zero, control the first switching transistor in each bridge arm to remain on, and control the electric energy transfer unit and charge the first capacitor by using the electric energy transfer unit; and
the controller is further configured to: after the first capacitor is charged by using the electric energy transfer unit, if the voltage across the two ends of the first capacitor does not reach the voltage threshold, output information indicating that the third switching transistor is short-circuited.

10. The power converter according to claim 2 or 3, wherein the power converter further comprises an electric energy transfer unit, and the controller is configured to: after controlling the soft-start switch to be turned on, to connect the first capacitor and the second capacitor to the direct current power supply to charge the first capacitor and the second capacitor by using the direct current power supply,
if the voltage across the two ends of the first capacitor and the voltage across the two ends of the second capacitor are both greater than or equal to the voltage threshold, control the target switching transistor to be turned off, and control the electric energy transfer unit and discharge the second capacitor by using the electric energy transfer unit;
the controller is further configured to: when the second capacitor is discharged by using the electric energy transfer unit until the voltage across the two ends of the second capacitor is zero, control the second switching transistor in each bridge arm to remain on, and control the electric energy transfer unit and charge the second capacitor by using the electric energy transfer unit; and
the controller is further configured to: after the second capacitor is charged by using the electric energy transfer unit, if the voltage across the two ends of the second capacitor does not reach the voltage threshold, output the information indicating that the fourth switching transistor is short-circuited.

11. The power converter according to any one of claims 7 to 10, wherein the electric energy transfer unit comprises an inductor, a fifth switching transistor and a sixth switching transistor that are connected in series, the fifth switching transistor is connected to the positive direct current busbar, the sixth switching transistor is connected to the negative direct current busbar, and a connection end of the fifth switching transistor and the sixth switching transistor is connected to the connection end of the first capacitor and the second capacitor through the inductor;
controlling the electric energy transfer unit and discharging the first capacitor or the second capacitor by using the electric energy transfer unit are specifically as follows:
controlling the fifth switching transistor and the sixth switching transistor to act, to transfer, through the inductor, electric energy of the first capacitor to the second capacitor to discharge the first capacitor, or transfer, through the inductor, electric energy of the second capacitor to the first capacitor to discharge the second capacitor; and
controlling the electric energy transfer unit and charging the first capacitor or the second capacitor by using the electric energy transfer unit is specifically as follows:
controlling the fifth switching transistor and the sixth switching transistor to act, to transfer, through the inductor, the electric energy of the second capacitor to the first capacitor to charge the first capacitor, or transfer, through the inductor, the electric energy of the first capacitor to the second capacitor to charge the second capacitor.

12. The power converter according to any one of claims 1 to 11, wherein in a process of charging the target capacitor, a voltage change rate across the two ends of the target capacitor is less than a specified threshold.
